# EUROPÄISCHE PATENTANMELDUNG

(11) **EP 4 215 359 A1**
(43) Veröffentlichungstag der Anmeldung: **26.07.2023**
(21) Anmeldenummer: 22152183.4
(22) Anmeldetag: 19.01.2022
(51) Int. Cl.: B32B 18/00, C04B 35/571, C04B 35/573, C04B 35/589, C04B 35/653, C04B 35/80

(54) **VERFAHREN ZUR HERSTELLUNG EINES KERAMISCHEN FASERVERBUNDBAUTEILS UND EIN KERAMISCHES FASERVERBUNDBAUTEIL**

(71) Anmelder: ArianeGroup GmbH, 82024 Taufkirchen (DE)
(72) Erfinder: Hofbauer, Peter Josef, 82024 Taufkirchen (DE); Höck, Maximilian, 83673 Bichl (DE); Schmidt-Wimmer, Stephan, 85221 Dachau (DE)
(74) Vertreter: Schornack, Oliver

(57) **Zusammenfassung**

Es wird ein Verfahren zur Herstellung eines keramischen Faserverbundbauteils (100) beschrieben. Das Verfahren umfasst ein Bereitstellen (310) eines keramischen Kerns (110), der das Innere des fertigen keramischen Faserverbundbauteils (100) bildet, und ein Aufbringen (320) einer äußeren Faserarmierung (120) auf den keramischen Kern (110). Gleichzeitig oder anschließend kann das Verfahren ein Infiltrieren (330) der Faserarmierung (120) mit einem kohlenstoffhaltigen oder einem polymeren Material (125), und ein Pyrolysieren (340) der infiltrierten Faserarmierung (120) oder des keramischen Kerns (110) mit der infiltrierten Faserarmierung (120) umfassen. Ferner ist ein Kompositverbundbauteil mit einem keramischen Kern und einer äußeren Faserarmierung, die mit einem pyrolysierten kohlenstoffhaltigen oder polymeren Material infiltriert ist, beschrieben. Das Infiltrieren (315, 330) kann vor dem Aufbringen (320) erfolgen.

## Beschreibung

Die Erfindung betrifft ein Verfahren zur Herstellung eines keramischen Faserverbundbauteils sowie ein keramisches Faserverbundbauteil. Insbesondere betrifft die Erfindung ein Verfahren zur Herstellung eines keramischen Bauteils, das eine Faserarmierung umfasst, welche von einem kohlenstoffhaltigen oder polymeren Material, das pyrolysiert ist, infiltriert ist. Ferner betrifft die Erfindung ein solches keramisches faserverstärktes Bauteil.

Viele Kompositverbundbauteile werden mehrschichtig hergestellt, wobei zwischen den einzelnen Schichten ein Formschluss und/oder Kraftschluss zu erzielen versucht wird. So werden beispielsweise auf Metallrohren Carbonfasern, die in einer passenden Matrix eingebettet sind, angeordnet, um den Metallrohren eine höhere (Berst-) Stabilität zu geben. Andererseits wird auf einen entnehmbaren oder verlorenen Kern ein Kompositmaterial (zum Beispiel ein Prepreg) aufgebracht und ausgehärtet. Anschließend wird der Kern mechanisch, thermisch und/oder chemisch entfernt. Der entfernte Kern kann jedoch meist nicht wieder verwendet werden.

Vor diesem Hintergrund liegt der vorliegenden Erfindung die Aufgabe zugrunde, ein kostengünstiges und schnelles Verfahren zum Herstellen eines keramischen faserverstärkten Bauteils sowie ein entsprechendes Bauteil, das hohen Belastungen standhält, bereitzustellen.

Diese Aufgabe wird durch ein Verfahren mit den Merkmalen des Anspruchs 1 sowie ein Bauteil mit den Merkmalen des Anspruchs 13 gelöst.

Gemäß einem ersten Aspekt zum besseren Verständnis der vorliegenden Offenbarung umfasst ein Verfahren zur Herstellung eines keramischen Faserverbundbauteils ein Bereitstellen eines keramischen Kerns, der das Innere des fertigen keramischen Faserverbundbauteils bildet, und ein Aufbringen einer äußeren Faserarmierung auf den keramischen Kern. Der keramische Kern verbleibt in dem Bauteil, weshalb das übliche Entfernen eines innenliegenden Kerns zum Formen des äußeren Kompositmaterials entfällt. Das Herstellverfahren ist daher schneller und kostengünstiger.

Ferner können aufgrund der Eigenschaften des keramischen Kerns bestimmte Funktionen des Bauteils von dem Kern übernommen werden. So lässt sich der keramische Kern neben der Formgebung für die Faserarmierung auch zur Erhöhung der Bauteilleistung, zum Beispiel durch Steigerung der Steifigkeit oder Festigkeit, als Oxidationsschutz der Faserarmierung und/oder zur Erzielung einer Gasdichtigkeit einsetzen. Ferner kann der Kern mit Hohlräumen versehen werden, wodurch der Kern eine vorgegebene Isolationswirkung hat. Die Hohlräume können optional auch in Form von Kanälen vorliegen, durch die ein Kühlmittel strömen kann, wodurch der Kern eine Kühlfunktion übernehmen kann. Schließlich können auch Sensoren oder andere Bauelemente in den Kern integriert werden, um Messungen direkt im Bauteil vorzunehmen. Diese Funktionalitäten des Kerns lassen sich in Bauteilen, die ausschließlich aus einem faserverstärkten Material, insbesondere Bauteilen mit Langfasern, bestehen, nicht umsetzen.

Das Verfahren umfasst ferner ein Infiltrieren der Faserarmierung mit einem kohlenstoffhaltigen oder einem polymeren Material, und ein Pyrolysieren der infiltrierten Faserarmierung oder des keramischen Kerns mit der infiltrierten Faserarmierung. Mit anderen Worten wird eine Matrix um die Faserarmierung gebildet, die zusammen mit dieser einen keramischen Faserverbundwerkstoff bildet. Dadurch lässt sich ein Bauteil mit hoher Festigkeit herstellen, das die Eigenschaften des keramischen Kerns und des keramischen Faserverbundwerkstoffes vereint.

In einer Implementierungsvariante kann das Infiltrieren vor dem Aufbringen erfolgen. Mit anderen Worten wird die Faserarmierung mit dem kohlenstoffhaltigen oder polymeren Material versehen, es kann auch von Imprägnierung gesprochen werden, bevor die Faserarmierung auf dem keramischen Kern aufgebracht wird. Die imprägnierte Faserarmierung kann auch als Prepreg bezeichnet werden. Beispielsweise wird eine Faser (insbesondere eine Langfaser als Faser-Roving), die die Faserarmierung bildet, mit einem keramischen Prekursor benetzt und somit infiltriert.

In einer weiteren Implementierungsvariante kann das Infiltrieren der Fasern für eine Faserarmierung in einem Tauchbecken mit einem keramischen Prekursor erfolgen. Lediglich beispielhaft kann der Prekursor ein keramischer Schlicker sein oder polymerbasiert sein, wie zum Beispiel Polysilazan. Somit kann das Aufbringen der Faserarmierung auf den keramischen Kern als ein Nasswickelverfahren oder Nassflechtverfahren mit der imprägnierten Faserarmierung durchgeführt werden.

In einer anderen Implementierungsvariante kann das Pyrolysieren eine Wärmebehandlung der infiltrierten Faserarmierung oder des keramischen Kerns mit der infiltrierten Faserarmierung umfassen. Durch die Wärmebehandlung wird ein Matrixaufbau oder eine Matrixkonvertierung des kohlenstoffhaltigen Materials bewirkt. Handelt es sich bei dem bei der Infiltration eingesetzten Material um ein Polymer, bewirkt die Wärmebehandlung eine Umwandlung des polymeren Materials zu Kohlenstoff. Das Pyrolysieren kann beispielsweise durch Aufheizen der Faserarmierung (und dabei gegebenenfalls auch des keramischen Kerns) auf eine Temperatur zwischen 800 °C und 1600 °C, vorzugsweise zwischen 900 °C und 1200 °C, erfolgen. Die Temperatur kann in Abhängigkeit des zu pyrolysierenden Materials gewählt werden. So kann bei einem Harz (Polymer) eine Carbonisierung zum Beispiel bei ca. 900 °C erfolgen, bei Polisilizan (Polymer) findet eine Pyrolyse zwischen 1000 °C und 1200 °C statt. Bei einem siliziumhaltigen Polymer kann dieses auch mit anderen Bestandteilen in diesem Temperaturbereich reagieren, zum Beispiel Kohlenstoff mit Silizium zu SiC. Soll beispielsweise Stickstoff (N) abgeschieden werden, sind auch Temperaturen von mehr als 1400 °C, zum Beispiel 1600 °C, vorteilhaft. Aufgrund der Reaktionen und der Konvertierung der Matrix bei der hohen Temperatur kann beim Pyrolysieren auch von Keramisierung gesprochen werden, da das Material zur Infiltrierung der Faserarmierung einen keramischen Zustand erreicht.

In noch einer weiteren Implementierungsvariante kann das Aufbringen der äußeren Faserarmierung ein Bereitstellen einer imprägnierten Faser als Prepreg und ein Aufbringen des Prepregs auf den keramischen Kern umfassen. Dabei kann die imprägnierte Langfaser auf eine Trommel zur Prepreg-Fertigung aufgewickelt werden. Das Aufbringen auf den keramischen Kern mit einem Prepreg erfolgt dann zum Beispiel im Laminierverfahren.

In einer Implementierungsvariante kann das Verfahren ferner ein Nachinfiltrieren der äußeren Faserarmierung mit einem Prekursor umfassen. Der Prekursor kann zum Beispiel ein keramischer oder polymerer Prekursor sein. Ein weiteres Pyrolysieren der nachinfiltrierten Faserarmierung dient zur Materialverdichtung und kann so lange durchgeführt werden, bis die gewünschte maximale Restporosität erreicht ist. Die Restporosität kann beispielsweise nach einem weiteren Pyrolysieren weniger als 5 % betragen.

Alternativ oder zusätzlich kann das Verfahren ferner ein Nachinfiltrieren der pyrolysierten Faserarmierung mit schmelzflüssigem Silizium umfassen. Dabei kann das Silizium mit dem Kohlenstoff (aus dem pyrolysierten infiltrierten Material oder dem pyrolysierten Polymer) zu Siliziumkarbid reagieren. Aufgrund des schmelzflüssigen Siliziums wird auch von einem flüssigen Siliziuminfiltrationsprozess (Engl.: Liquid Silicon Infiltration - LSI) gesprochen.

Lediglich beispielhaft kann das Nachinfiltrieren in einem Exsikkator, Autoklaven oder Vakuumsack erfolgen.

In einer anderen Implementierungsvariante kann das Infiltrieren mit gasförmigen Stoffen erfolgen. Hierbei wird vorzugsweise der Matrixaufbau mittels chemischer Gasphaseninfiltration vorgenommen. Mit anderen Worten wird das kohlenstoffhaltige Material unter Wärmeeinwirkung aus einem Gas abgeschieden, wobei es die Faserarmierung infiltriert und sich auf dem Faserfilament ablegt. Bei dem Gas kann es sich zum Beispiel um Methan, Propan oder ein gesättigt des Trägergas, zum Beispiel durch Verdampfen von Toluol, handeln.

Alternativ oder zusätzlich kann in dem Prozess der Gasphaseninfiltration auch Siliziumkarbid aus dem Gas abgeschieden werden und zum Materialaufbau auf die Faserarmierung aufgebracht werden.

In einer weiteren Implementierungsvariante kann das Bereitstellen des keramischen Kerns eine additive Fertigung des keramischen Kerns umfassen. Eine additive Fertigung ermöglicht die Formung eines keramischen Kerns, der die Innenstruktur des fertigen Bauteils bildet. Die additive Fertigung ermöglicht jede beliebige Form des Kerns und somit des Bauteils, auch solche, die nicht durch entnehmbare Kerne gebildet werden kann. Ein entnehmbarer Kern wäre zum Beispiel zylindrisch und kann aus dem fertigen Bauteil herausgezogen (entnommen) werden. Durch das additive Fertigen sind Formen des Kerns möglich, die Abzweigungen umfassen, Hohlräume, Vertiefungen, Erhebungen, etc.

In noch einer weiteren Implementierungsvariante kann die additive Fertigung ein selektives Lasersintern, selektives Laserschmelzen, Photopolymerisation, pulverbettbasiertes Schmelzen oder Freistrahlmaterialauftrag eines Grundmaterials umfassen. Bei dem Grundmaterial kann es sich um ein Material handeln, welches durch das additive Fertigungsverfahren in einen keramischen Zustand übergeführt wird. Das Grundmaterial kann pulverförmig oder flüssig vorliegen und Schicht für Schicht den keramischen Kern formen.

Alternativ oder zusätzlich kann die additive Fertigung mit einem Grundmaterial durchgeführt werden, das im vorkeramischen Zustand bleibt. Die additive Fertigung kann ein adhäsives Verfahren umfassen, kann aber ebenso ein Lasersintern oder Laserschmelzen umfassen. Jedoch wird das Grundmaterial nicht in den keramischen Zustand überführt, sondern lediglich miteinander verklebt. Hierbei kann es sich ebenfalls um ein pulverförmiges Material handeln. Der Kern liegt somit als Preform vor und ist noch nicht in dem Materialzustand, wie in dem fertigen Bauteil.

Wenn der Kern im vorkeramischen Zustand (Preform) vorliegt, wird das Pyrolysieren und/oder eine Umwandlung des Materials zusammen mit der infiltrierten Faserarmierung auf den keramischen Kern angewandt. Dadurch kann eine Keramisierung des Kerns zusammen mit der Keramisierung der Armierung stattfinden. Dies ermöglicht eine Anbindung der Faserarmierung an den Kern, also ein Stoffschluss zwischen Faserarmierung und Kern.

In einer anderen Implementierungsvariante kann die Faserarmierung Kohlenstofffasern oder Siliziumkarbid-Fasern umfassen.

In noch einer weiteren Implementierungsvariante kann das polymere Material Polysilazan oder ein Phenolharz umfassen. Polysilazan bildet während des Pyrolysierens Siliziumkarbid als keramische Phase. Ein Phenolharz wird während des Pyrolysierens in porösen, amorphen Kohlenstoff umgewandelt.

In einer anderen Implementierungsvariante kann das Verfahren ferner ein Aufbringen einer Zwischenschicht oder Zwischenphase auf den keramischen Kern umfassen, bevor die Faserarmierung aufgebracht wird. Die Zwischenphase kann kohlenstoffhaltig sein, oder dem Infiltrat der Faserarmierung entsprechen.

Gemäß einem weiteren Aspekt zum besseren Verständnis der vorliegenden Offenbarung umfasst ein Kompositverbundbauteil einen keramischen Kern, der das Innere des Bauteils bildet, und eine äußere Faserarmierung, die den keramischen Kern umgibt und Kohlenstofffasern oder Siliziumkarbid-Fasern, die eine Faserarchitektur bilden und mit einem pyrolysierten kohlenstoffhaltigen oder polymeren Material infiltriert sind. Das Kompositbauteil kann beispielsweise durch das Verfahren gemäß dem ersten Aspekt oder einer der zugehörigen Implementierungsvarianten hergestellt werden.

Durch die Kombination eines keramischen Kerns mit einer außenliegenden Faserverstärkung (Faserarmierung) kann das Bauteil sowohl die Eigenschaften des keramischen Kerns als auch die der Faserarmierung aufweisen. In einer Faserverstärkung ist es beispielsweise sehr schwierig, Kühlkanäle vorzusehen. Diese müssten als eigenständige Kanäle in die Faserverstärkung integriert werden. Bei dem keramischen Kern können die Kühlmittelkanäle durch Hohlräume in dem keramischen Material gebildet werden.

Zudem kann der Kern, der keramisch ausgebildet ist, gasdicht sein. Dies verhindert, dass Sauerstoff zu der Faserarmierung oder Kühlmittel aus den Kühlkanälen zur Außen- oder Innenwand gelangt. Ist das Kompositbauteil hohen Temperaturen ausgesetzt, könnte die Faser, insbesondere wenn es sich um eine Kohlefaser handelt, im Zusammenwirken mit Sauerstoff Schaden nehmen, beispielsweise oxidieren. Durch den gasdicht hergestellten keramischen Kern wird dies verhindert.

In einer Implementierungsvariante kann der keramische Kern innenliegende Hohlräume, zu Kanälen verbundene innenliegende Hohlräume und/oder Sensoren umfassen. Der keramische Kern kann somit Funktionen des fertigen Bauteils übernehmen, wie zum Beispiel Isolationseigenschaften durch die Hohlräume, die Führung von Kühlmittel durch die Kanäle bzw. Messungen in dem Bauteil mithilfe von Sensoren, insbesondere die in dem Kern umfassten Sensoren.

In einer anderen Implementierungsvariante kann das Kompositbauteil ferner eine Zwischenschicht oder Zwischenphase zwischen dem keramischen Kern und der Faserarmierung umfassen. Die Zwischenschicht oder Zwischenphase kann der Verbesserung des Formschlusses oder Kraftschlusses zwischen Kern und Faserarmierung dienen, beispielsweise durch eine bessere Verbindung sowohl zu dem Kern als auch der Faserarmierung. Ferner ist es möglich, durch eine oder mehrere geeignete Zwischenschichten oder Zwischenphasen thermische Spannungen zwischen Kern und Faserarmierung zu reduzieren. Insbesondere während des Pyrolysierens oder bei der chemischen Gasphasenabscheidung bzw. Infiltration wird sowohl der Kern als auch die Faserarmierung erhitzt und dehnen sich aus, und je nach Implementierungsvariante können die Faserarmierung aber auch der Kern ihren Materialzustand ändern (zum keramischen Zustand übergehen), wodurch bei einer Abkühlung aller Komponenten diese ein unterschiedliches Schrumpfungsverhalten (oder Schwindungsverhalten) aufweisen können. Diese Unterschiede können durch eine oder mehrere Zwischenschichten oder Zwischenphase ausgeglichen werden.

Gemäß noch einem weiteren Aspekt zum besseren Verständnis der vorliegenden Offenbarung umfasst ein Verfahren zum Herstellen eines Raketentriebwerksabschnitts ein Bereitstellen mindestens eines Grundstoffs, und ein Herstellen des Raketentriebwerksabschnitts gemäß dem Verfahren des ersten Aspekts. Der bereitgestellte Grundstoff wird mittels additiver Fertigung zu dem keramischen Kern geformt, der die innere Form für die Faserarmierung aber auch den Raketentriebwerksabschnitt bildet.

Beim Herstellen des Raketentriebwerksabschnitts, beispielsweise eines Brennkammerkörpers, und insbesondere des keramischen Kerns, können Kühlmittelkanäle in dem keramischen Kern während und mittels der additiven Fertigung gebildet werden. Diese Kühlmittelkanäle dienen in dem fertigen Brennkammerkörper zur Durchleitung eines Kühlmittels, um die Innenseite des Brennkammerkörpers, die bei der Verbrennung erhitzt wird, zu kühlen.

Insbesondere durch eine additive Fertigung (auch als 3D-Druck, Binder Jetting, selektives Laserschmelzen und -sintern, Photopolymerisation, FreistrahlMaterialauftrag, oder Additive Layer Manufacturing - ALM bekannt) kann der keramische Kern schichtweise mit den darin ausgebildeten Kanälen und/oder integrierten Sensoren oder anderen Komponenten hergestellt werden. Dadurch lassen sich sämtliche Hohlräume, zum Beispiel das Innere eines Kanals sowie anderweitige Hohlräume, in einfacher, schneller und kostengünstiger Weise und in beliebiger Form herstellen.

Bei dem Grundstoff kann es sich um einen pulverförmigen Grundstoff handeln. Ebenso ist es möglich, einen flüssigen Grundstoff zu verwenden. In beiden Fällen kann durch Energieeintrag, beispielsweise mittels Laser, der Grundstoff zu einer festen Struktur verbunden werden, die in der Lage ist, die Faserarmierung aufzunehmen und dabei ihre Form beizubehalten. Alternativ kann der Grundstoff auch in einem Binder-Jetting-Verfahren oder jedem beliebigen schlicker- oder pulverbettbasierten Verfahren verarbeitet werden.

Gemäß einem anderen Aspekt zum besseren Verständnis der vorliegenden Offenbarung umfasst ein Raketentriebwerk ein Bauteil gemäß dem zweiten Aspekt oder einer der dazu beschriebenen Implementierungsvarianten.

Die oben beschriebenen Aspekte und Implementierungsvarianten können selbstverständlich kombiniert werden, ohne dass dies explizit beschrieben ist. Jede der beschriebenen Implementierungsvarianten ist somit optional zu jeder Implementierungsvariante oder bereits Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Implementierungsvarianten beschränkt.

Bevorzugte Ausführungsformen der Erfindung werden nun anhand der beigefügten schematischen Zeichnungen näher erläutert, wobei
- Figur 1: schematisch eine perspektivische, teilweise aufgeschnittene Ansicht eines Raketentriebwerksabschnitts zeigt;
- Figur 2: schematisch ein Bauteil in Form einer Rohrverzweigung zeigt; und
- Figur 3: schematisch ein Ablaufdiagramm eines Verfahrens zur Herstellung eines keramischen Faserverbundbauteils zeigt.

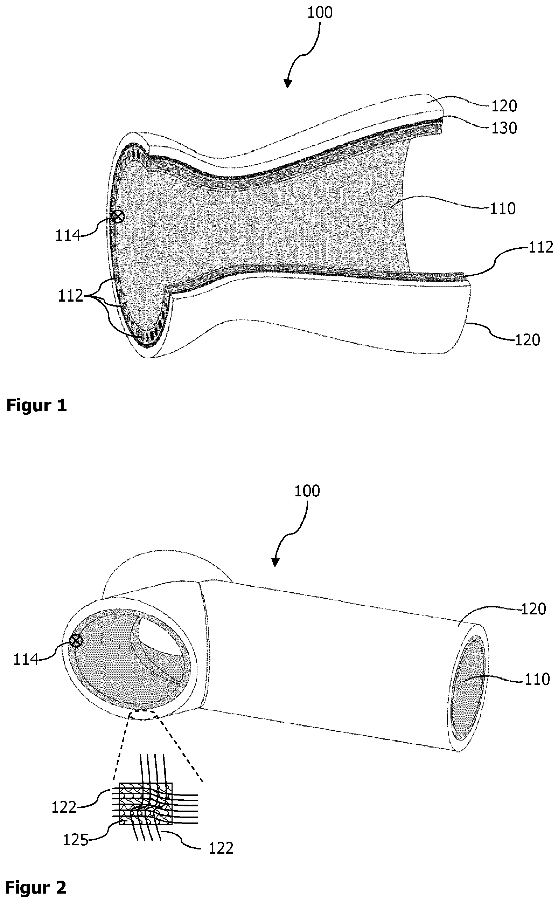

Figur 1 zeigt schematisch ein Faserverbundbauteil 100, welches beispielsweise ein Brennkammerabschnitt eines Raketentriebwerks sein kann. Das Faserverbundbauteil 100 (nachfolgend auch kurz als "Verbundbauteil" bezeichnet) umfasst einen keramischen Kern 110, der beispielsweise in einem additiven Verfahren aus einem geeigneten Grundstoff hergestellt werden kann. Dies ermöglicht die Herstellung eines Kerns 110, der die Innenseite des Verbundbauteil 100, hier des Brennkammerabschnitt, bildet.

Die additive Fertigung bietet den Vorteil, in dem Kern 110 Hohlräume vorzusehen, beispielsweise Kanäle 112. Diese Kanäle 112 können als Kühlmittelkanäle verwendet werden und sind bereits in dem Verbundbauteil 100 integriert. Ebenso können in Hohlräumen 112 oder direkt in dem Material des Kerns 110 Sensoren 114 oder andere Komponenten integriert werden.

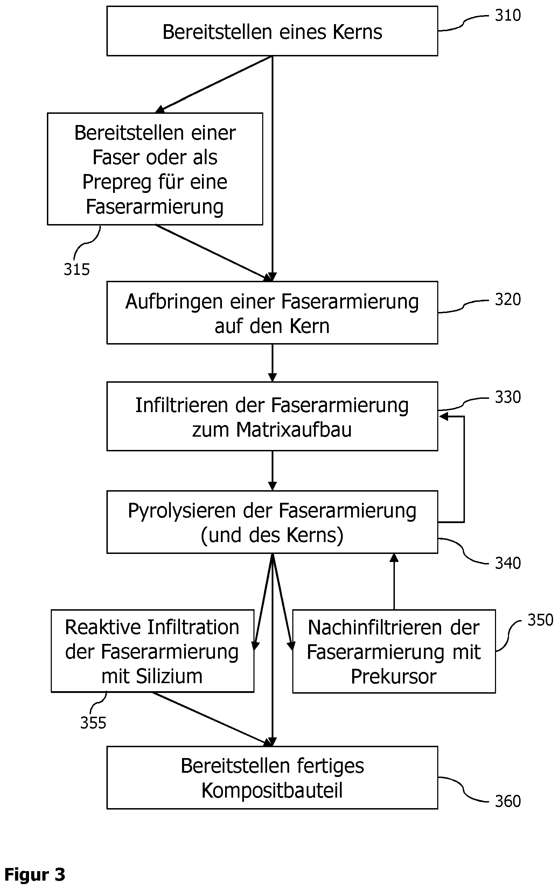

Der keramische Kern 110 ist von einer äußeren Faserarmierung 120 umgeben. Die Faserarmierung 120 bietet eine hohe Festigkeit für den keramischen Kern 110, sodass der Kern 110 dünner ausgestaltet sein kann. Die Faserarmierung 120 kann Fasern 122 (Figur 2) umfassen, die beispielsweise Kohlenstoff oder Siliziumkarbid umfassen. Die Kohlenstofffasern oder Siliziumkarbid-Fasern 122 können mit einem pyrolysierten kohlenstoffhaltigen oder polymeren Material 125 infiltriert sein. Die Herstellung des Materials 125 wird noch detaillierter in Bezug auf die Figur 3 erläutert.

Um einen besseren Halt (Verbund) zwischen dem Kern 110 und der Faserarmierung 120 zu gewährleisten, kann eine Zwischenschicht oder Zwischenphase 130 zwischen dem keramischen Kern 110 und der Faserarmierung 120 vorgesehen sein.

Bei üblichen Raketentriebwerksbauteilen muss ein keramischer Kern viel stärker ausgestaltet sein, um den Belastungen während des Betriebs des Raketentriebwerks standzuhalten. Die hierfür notwendige Festigkeit kann jedoch durch die Faserarmierung 120, insbesondere in Kombination mit dem Matrixmaterial 125, gewährleistet werden. Somit kann der keramische Kern 110 deutlich dünner ausgestaltet sein, während das Raketentriebwerksbauteil die gleiche Festigkeit aufweist. Dadurch kann das Raketentriebwerksbauteil leichter und kostengünstiger hergestellt werden.

Figur 2 zeigt schematisch ein weiteres exemplarisches Verbundbauteil 100 in Form eines Rohrabzweigs. Für die konventionelle Herstellung eines solchen Rohrabzweigs in Kompositbauweise ist ein verlorener Kern notwendig, der nach der Herstellung des Rohrabzweigs entfernt werden muss. Aufgrund der Abzweigung kann der Kern nicht an einem Stück herausgenommen werden, sondern muss mehrteilig ausgestaltet sein oder mechanisch, thermisch oder chemisch zerstört werden.

Der hier dargestellte Rohrabzweig hingegen weist einen keramischen Kern 110 auf, der beispielsweise durch ein additives Fertigungsverfahren entsprechend der notwendigen und gewünschten Form gebaut wird. Auf den Kern 110 wird eine äußere Faserarmierung 120 aufgebracht, die zusammen mit dem Matrixwerkstoff eine hohe Festigkeit und Beständigkeit erlangt. Die Verwendung eines verlorenen Kerns ist für die Herstellung nicht notwendig. Ein solches Verbundbauteil 100 weist nicht nur eine sehr hohe Festigkeit auf, sondern ist auch leichter als herkömmliche Rohre und kann zudem eine Gasdichtigkeit aufweisen.

Auch in diesem Verbundbauteil 100 können Sensoren 114 in den Kern 110 integriert werden, um Messungen direkt im Rohrabzweig vorzunehmen. Die Faserarmierung 120 ist in einem Ausschnitt detaillierter schematisch dargestellt. Die Faserarmierung 120 weist eine Vielzahl von Fasern 122 auf, die auf den Kern 110 gewickelt, geflochten und/oder als Prepreg laminiert werden können. Der Kern 110 dient somit als Halteform für die Faserarmierung 120. Die Faserarmierung 120 kann ferner mit einem Material 125 infiltriert werden, dass kohlenstoffhaltig ist oder ein Polymer umfasst. Durch eine anschließende Pyrolyse und/oder Konvertierung des Matrixwerkstoffs wird die Faserarmierung 120 keramisch, wodurch das Verbundbauteil 100 eine sehr hohe Festigkeit erlangt.

Figur 3 zeigt schematisch ein Ablaufdiagramm von Verfahrensvarianten zur Herstellung eines keramischen Faserverbundbauteils 100. Dieses beginnt mit dem Bereitstellen 310 eines keramischen Kerns 110, der das Innere des fertigen keramischen Verbundbauteils 100 bildet. Optional kann das Bereitstellen 310 eine additive Fertigung (nicht dargestellt) des keramischen Kerns 110 umfassen.

In einem weiteren optionalen Schritt 315 kann zunächst eine Faser 122 imprägniert und bereitgestellt werden. Diese Imprägnierung der Faser 122 dient als Vorstufe einer Faserarmierung 120. Zum Beispiel kann eine imprägnierte Faser direkt auf das Bauteil gewickelt werden (Nasswickelverfahren) oder zur Prepregherstellung verwendet werden.

In einem weiteren Schritt 320 wird eine Faserarmierung 120 (oder ein Prepreg aus Schritt 315) auf den keramischen Kern 110 aufgebracht. Diese äußere Faserarmierung 120 dient später als Verstärkung des keramischen Kerns 110. Das Aufbringen 320 kann durch verschiedene Verfahren bewerkstelligt werden, zum Beispiel Nasswickeln, Nassflechten, Trockenwickeln, -flechten, Laminieren o. ä.

In dem Schritt 330 wird die Faserarmierung 120 mit einem kohlenstoffhaltigen oder einem polymeren Material 125 infiltriert. Die Faserarmierung 120, insbesondere die darin enthaltenen Fasern 122, werden von dem Material 125 benetzt, belegt, durchdrungen oder anderweitig umgeben. Das polymere Material 125 kann Polysilazan oder ein Phenolharz umfassen. Das kohlenstoffhaltige Material kann eine Rußsuspension oder einen kohlenstoffhaltigen Schlicker umfassen.

Gemäß einer Option kann das Infiltrieren des Schritts 330 in dem Schritt 315, also vor dem Schritt 320 des Aufbringens, erfolgen, beispielsweise durch Einsatz eines Tauchbeckens mit einem keramischen Prekursor, durch den die Faser 122 geführt wird. Bei dem Prekursor kann es sich um einen keramischen Schlicker handeln. Die so imprägnierte Faser 122 kann durch Nasswickeln, Nassflechten oder Laminieren von zuvor gefertigten Prepregs auf den Kern 110 aufgebracht werden.

Das Infiltrieren kann generell mittels Flüssigphaseninfiltration erfolgen. Diese kann beispielsweise als Polymerinfiltration- und Pyrolyseprozess (PIP), zum Beispiel unter Verwendung von Polysilazan als Material 125, oder als reaktiver Schmelzsiliziuminfiltrationsprozess (LSI - Liquid Silicon Infiltration), zum Beispiel unter Verwendung von Phenolharz und Vernetzung mit anschließender Pyrolyse und Schmelzinfiltration, durchgeführt werden. Neben den Flüssigphaseninfiltrationen können auch Gasphaseninfiltrationsverfahren für den Aufbau einer kohlenstoff- oder siliziumkarbidbasierten Matrix angewandt werden.

Anschließend wird in Schritt 340 die Faserarmierung 120 pyrolysiert. Die hierbei erzielte Wärmeeinwirkung kann nicht nur die Faserarmierung 120 sondern optional auch den Kern 110 erhitzen. Dabei kann ein Matrixaufbau oder eine Matrixkonvertierung (-umwandlung) des kohlenstoffhaltigen Materials 125 bewirkt werden. Ist das Material 125, mit dem die Faser 122 infiltriert ist, ein Polymer oder umfasst ein Polymer, kann das Pyrolysieren in Schritt 340 auch eine Umwandlung des Materials 125 zumindest teilweise zu Kohlenstoff bewirken. In jedem Fall wird die Faserarmierung 120 in einen keramischen Zustand überführt. Dadurch erlangt das Bauteil eine sehr hohe Festigkeit, wobei der Matrixwerkstoff eine hohe Steifigkeit bedingt, selbst aber spröde ist und eine geringe Festigkeit aufweist, und die Faser eine hohe Festigkeit beiträgt. Mit anderen Worten führt die eingebettete Faser zur Festigkeitssteigerung des Matrixmaterials.

Die Schritte 330 und 340 können auch gleichzeitig durchgeführt werden, beispielsweise in einer chemischen Gasphaseninfiltration. Dabei wird bei einer hohen Temperatur Kohlenstoff oder Siliziumkarbid aus einem Gas ausgeschieden, der/das die Faserarmierung 120 infiltriert und sich auf die Faser legt. Hierbei kann die Faser 122 der Faserarmierung 120 sowohl trocken auf den Kern 110 gelegt werden als auch in einem der oben genannten Nasslegeverfahren aufgebracht werden.

In jedem Fall kann der Schritt 330 des Infiltrierens und des Pyrolysierens (Schritt 340) wiederholt werden, bis die Faserarmierung 120 die gewünschte Dichteaufweist.

Gemäß einer weiteren Option, und vorzugsweise in Kombination mit der chemischen Gasphaseninfiltration, kann der keramische Kern 110 in einem vorkeramischen Zustand in Schritt 310 bereitgestellt werden. In diesem Zustand ist der Kern 110 formstabil genug, um die Faserarmierung 120 darauf aufzubringen. Während des Pyrolysierens in Schritt 340 kann der Kern 110 zusammen mit der Faserarmierung 120 in den keramischen Zustand überführt werden. Dies ermöglicht eine Erhitzung (und somit Ausdehnung) und Abkühlung (und somit Zusammenziehen) aller Komponenten in den gleichen oder zumindest sehr ähnlichen Zuständen.

Ein weiterer optionaler Schritt ist ein Nachinfiltrieren der Faserarmierung 120 in Schritt 350, beispielsweise mit einem Prekursor. Insbesondere kann es sich um einen keramischen Prekursor und/oder um ein Polymer handeln. Anschließend geht das Verfahren zu dem Schritt 340 zurück, in dem die Faserarmierung 120 erneut pyrolysiert wird. Dadurch kann die Porosität der Faserarmierung 120 reduziert werden.

Ein ebenfalls möglicher Schritt ist die reaktive Infiltration der Faserarmierung 120 mit schmelzflüssigem Silizium in Schritt 355. Dieser Schritt 355 kann auch nach einer Nachinfiltrierung gemäß Schritt 350 und wiederholter Pyrolyse 340 erfolgen. Zum Beispiel kann schmelzflüssiges Silizium auf/in die poröse Kohlenstoffmatrix der Faserarmierung 120 aufgebracht und eingebracht werden. Dabei kann der Kohlenstoff mit dem Silizium zu Siliziumkarbid reagieren. Dieser Schritt 355 eignet sich insbesondere für den Schmelzsiliziuminfiltrationsprozess.

Das Nachinfiltrieren in Schritt 350 kann beispielsweise in einem Exsikkator, Autoklaven oder Vakuumsack durchgeführt werden. Ferner kann die reaktive Infiltration in Schritt 355 unter Vakuum oder Inertgases in Siliziumöfen (zum Beispiel widerstandsbeheizter, grafitischer Vakuumofen) oberhalb des Siliziumschmelzpunktes durchgeführt werden.

Schließlich wird in Schritt 360 das fertige Kompositbauteil 100 bereitgestellt, das beispielsweise aus der Infiltriervorrichtung und/oder Pyrolysevorrichtung entnommen wird.

Die hier beschriebenen Ausführungsformen sind lediglich beispielhaft und dienen nur der Erläuterung der vorliegenden Erfindung.

## Patentansprüche

1. Verfahren zur Herstellung eines keramischen Faserverbundbauteils (100), wobei das Verfahren umfasst:
Bereitstellen (310) eines keramischen Kerns (110), der das Innere des fertigen keramischen Faserverbundbauteils (100) bildet;
Aufbringen (320) einer äußeren Faserarmierung (120) auf den keramischen Kern (110);
Infiltrieren (330) der Faserarmierung (120) mit einem kohlenstoffhaltigen oder einem polymeren Material (125); und
Pyrolysieren (340) der infiltrierten Faserarmierung (120) oder des keramischen Kerns (110) mit der infiltrierten Faserarmierung (120).

2. Verfahren gemäß Anspruch 1, wobei das Infiltrieren (315, 330) vor dem Aufbringen (320) erfolgt.

3. Verfahren gemäß Anspruch 2, wobei das Infiltrieren (315) von Fasern für die Faserarmierung (120) in einem Tauchbecken mit einem keramischen Prekursor, vorzugsweise einem keramischen Schlicker, erfolgt.

4. Verfahren gemäß einem der Ansprüche 1 bis 3, wobei das Pyrolysieren (340) eine Wärmebehandlung der infiltrierten Faserarmierung (120) oder des keramischen Kerns (110) mit der infiltrierten Faserarmierung (120) umfasst, die einen Matrixaufbau oder eine Matrixkonvertierung des kohlenstoffhaltigen Materials bewirkt oder eine Umwandlung des polymeren Materials (125) zu Kohlenstoff bewirkt.

5. Verfahren gemäß einem der Ansprüche 1 bis 4, wobei das Aufbringen (320) der äußeren Faserarmierung (120) ein Bereitstellen (315) einer imprägnierten Faser als Prepreg und ein Aufbringen des Prepregs auf den keramischen Kern (110) umfasst.

6. Verfahren gemäß einem der Ansprüche 1 bis 5, ferner umfassend:
Nachinfiltrieren (350) der äußeren Faserarmierung (120) mit einem Prekursor, vorzugsweise einem keramischen Prekursor, und/oder
Nachinfiltrieren (355) der pyrolysierten Faserarmierung (120) mit schmelzflüssigem Silizium.

7. Verfahren gemäß Anspruch 6, wobei das Nachinfiltrieren (350) in einem Exsikkator, Autoklaven oder Vakuumsack durchgeführt wird.

8. Verfahren gemäß Anspruch 1, wobei das Infiltrieren (330) mit gasförmigen Stoffen, vorzugsweise mittels chemischer Gasphaseninfiltration, erfolgt.

9. Verfahren gemäß einem der Ansprüche 1 bis 8, wobei das Bereitstellen (310) des keramischen Kerns (110) eine additive Fertigung des keramischen Kerns (110) umfasst.

10. Verfahren gemäß Anspruch 9, wobei die additive Fertigung ein selektives Lasersintern, selektives Laserschmelzen, Photopolymerisation, pulverbettbasiertes Schmelzen oder Freistrahlmaterialauftrag eines Grundmaterials umfasst, oder
wobei die additive Fertigung mit einem Grundmaterial durchgeführt wird, das im vorkeramischen Zustand bleibt.

11. Verfahren gemäß einem der Ansprüche 1 bis 10, wobei die Faserarmierung (120) Kohlenstofffasern oder Siliziumkarbid-Fasern umfasst.

12. Verfahren gemäß einem der Ansprüche 1 bis 11, wobei das polymere Material (125) Polysilazan oder ein Phenolharz umfasst.

13. Kompositverbundbauteil (100), umfassend:
einen keramischen Kern (110), der das Innere des Bauteils (100) bildet; und
eine äußere Faserarmierung (120), die den keramischen Kern (110) umgibt und Kohlenstofffasern (122) oder Siliziumkarbid-Fasern (122), die mit einem pyrolysierten kohlenstoffhaltigen oder polymeren Material (125) infiltriert sind, umfasst.

14. Kompositverbundbauteil (100) gemäß Anspruch 13, wobei der keramische Kern (110) innenliegende Hohlräume (112), zu Kanälen verbundene innenliegende Hohlräume (112) und/oder Sensoren (114) umfasst.

15. Kompositverbundbauteil (100) gemäß Anspruch 13 oder 14, ferner umfassend:
eine Zwischenphase (130) zwischen dem keramischen Kern (110) und der Faserarmierung (120).

## Geänderte Patentansprüche

### Geänderte Patentansprüche gemäss Regel 137(2) EPÜ.

1. Verfahren zur Herstellung eines keramischen Faserverbundbauteils (100), wobei das Verfahren umfasst:
Bereitstellen (310) eines keramischen Kerns (110), der das Innere des fertigen keramischen Faserverbundbauteils (100) bildet, wobei der keramische Kern (110) gasdicht ausgestaltet ist [2/2-6; 6/3];
Aufbringen (320) einer äußeren Faserarmierung (120) aus Langfasern [2/26] auf den keramischen Kern (110) mittels Nassflechten oder Trockenflechten [10/10; 2/34];
Infiltrieren (330) der Faserarmierung (120) mit einem kohlenstoffhaltigen oder einem polymeren Material (125); und
Pyrolysieren (340) der infiltrierten Faserarmierung (120) oder des keramischen Kerns (110) mit der infiltrierten Faserarmierung (120).

2. Verfahren gemäß Anspruch 1, wobei das Infiltrieren (315, 330) vor dem Aufbringen (320) erfolgt.

3. Verfahren gemäß Anspruch 2, wobei das Infiltrieren (315) von Fasern für die Faserarmierung (120) in einem Tauchbecken mit einem keramischen Prekursor, vorzugsweise einem keramischen Schlicker, erfolgt.

4. Verfahren gemäß einem der Ansprüche 1 bis 3, wobei das Pyrolysieren (340) eine Wärmebehandlung der infiltrierten Faserarmierung (120) oder des keramischen Kerns (110) mit der infiltrierten Faserarmierung (120) umfasst, die einen Matrixaufbau oder eine Matrixkonvertierung des kohlenstoffhaltigen Materials bewirkt oder eine Umwandlung des polymeren Materials (125) zu Kohlenstoff bewirkt.

5. Verfahren gemäß einem der Ansprüche 1 bis 4, wobei das Aufbringen (320) der äußeren Faserarmierung (120) ein Bereitstellen (315) einer imprägnierten Langfaser als Prepreg und ein Aufbringen des Prepregs auf den keramischen Kern (110) umfasst.

6. Verfahren gemäß einem der Ansprüche 1 bis 5, ferner umfassend:
Nachinfiltrieren (350) der äußeren Faserarmierung (120) mit einem Prekursor, vorzugsweise einem keramischen Prekursor, und/oder
Nachinfiltrieren (355) der pyrolysierten Faserarmierung (120) mit schmelzflüssigem Silizium.

7. Verfahren gemäß Anspruch 6, wobei das Nachinfiltrieren (350) in einem Exsickator, Autoklaven oder Vakuumsack durchgeführt wird.

8. Verfahren gemäß Anspruch 1, wobei das Infiltrieren (330) mit gasförmigen Stoffen, vorzugsweise mittels chemischer Gasphaseninfiltration, erfolgt.

9. Verfahren gemäß einem der Ansprüche 1 bis 8, wobei das Bereitstellen (310) des keramischen Kerns (110) eine additive Fertigung des keramischen Kerns (110) umfasst.

10. Verfahren gemäß Anspruch 9, wobei die additive Fertigung ein selektives Lasersintern, selektives Laserschmelzen, Photopolymerisation, pulverbettbasiertes Schmelzen oder Freistrahlmaterialauftrag eines Grundmaterials umfasst, oder
wobei die additive Fertigung mit einem Grundmaterial durchgeführt wird, das im vorkeramischen Zustand bleibt.

11. Verfahren gemäß einem der Ansprüche 1 bis 10, wobei die Faserarmierung (120) Kohlenstofffasern oder Siliziumkarbid-Fasern umfasst.

12. Verfahren gemäß einem der Ansprüche 1 bis 11, wobei das polymere Material (125) Polysilazan oder ein Phenolharz umfasst.

13. Kompositverbundbauteil (100), umfassend:
einen keramischen, gasdicht ausgebildeten Kern (110), der das Innere des Bauteils (100) bildet; und
eine äußere Faserarmierung (120) aus Langfasern, die den keramischen Kern (110) umflochten umgibt und Kohlenstofffasern (122) oder Siliziumkarbid-Fasern (122), die mit einem pyrolysierten kohlenstoffhaltigen oder polymeren Material (125) infiltriert sind, umfasst.

14. Kompositverbundbauteil (100) gemäß Anspruch 13, wobei der keramische Kern (110) innenliegende Hohlräume (112), zu Kanälen verbundene innenliegende Hohlräume (112) und/oder Sensoren (114) umfasst.

15. Kompositverbundbauteil (100) gemäß Anspruch 13 oder 14, ferner umfassend:
eine Zwischenphase (130) zwischen dem keramischen Kern (110) und der Faserarmierung (120).
